# EUROPÄISCHE PATENTSCHRIFT

(11) **EP 3 531 167 B1**
(45) Veröffentlichungstag und Bekanntmachung des Hinweises auf die Patenterteilung: **07.04.2021**
(21) Anmeldenummer: 18157749.5
(22) Anmeldetag: 21.02.2018
(51) Int. Cl.: G01S 17/42, G01S 17/89, G01S 7/481

(54) **VERFAHREN UND VORRICHTUNG ZUR OPTISCHEN DISTANZMESSUNG**
METHOD AND DEVICE FOR OPTICALLY MEASURING DISTANCES
PROCÉDÉ ET DISPOSITIF DE MESURE DE DISTANCE OPTIQUE

(43) Veröffentlichungstag der Anmeldung: 28.08.2019
(73) Patentinhaber: Ibeo Automotive Systems GmbH, 22143 Hamburg (DE)
(72) Erfinder: Birnbacher, Wolfgang, 22143 Hamburg (DE)
(74) Vertreter: RGTH

(56) Entgegenhaltungen:
- US-A- 5 283 622
- US-A1- 2016 182 788
- Anonymous: "Time-of-flight camera", Wikipedia, the free encyclopedia, 29. August 2015 (2015-08-29), Seiten 1-11, XP055370991, Gefunden im Internet: URL:https://en.wikipedia.org/w/index.php?t itle=Time-of-flight_camera&oldid=678428229 [gefunden am 2017-05-10]

## Beschreibung

### Technisches Gebiet

Die Erfindung betrifft ein Verfahren sowie eine Vorrichtung zur optischen Distanzmessung.

### Stand der Technik

Optische Distanzmessungen, insbesondere zur Anwendung in der fahrerlosen Navigation von Fahrzeugen, sind aus dem Stand der Technik bekannt. Sie beruhen auf dem Time-of-Flight-Prinzip, wobei zur Messung ein scannender Sensor, insbesondere ein LIDAR (Abkürzung für "light detection and ranging") Sensor eingesetzt wird, der periodisch Messpulse aussendet, die an Objekten reflektiert werden, wobei die reflektierten Messpulse detektiert werden. Aus der Bestimmung der Laufzeit der Messpulse von dem Sensor zu den Objekten und zurück kann mithilfe der Lichtgeschwindigkeit auf die Distanz zu diesen Objekten geschlossen werden.

Bei jedem sogenannten Time-of-Flight Sensor ist der maximale Messbereich technisch bedingt. Der maximale Messbereich ergibt sich aus einem maximalen Sichtfeld und einer maximalen Reichweite, bis zu der Reflektionen empfangen werden können.

Im Stand der Technik wird stets der gesamte maximale Messbereich, das heißt das vollständige Sichtfeld und der gesamte Distanzbereich bis zur maximalen Reichweite gleichmäßig gescannt. In vielen Anwendungen versucht im Anschluss eine nachfolgende Auswertung durch Verarbeitung der so erhaltenen Messdaten Objekte, wie beispielsweise Strukturen, zu finden und zu klassifizieren. Häufig stellt sich jedoch im Nachhinein ein großer Teil der Messdaten als wenig interessant heraus, da sich mit hoher Wahrscheinlichkeit kein Objekt in einem Großteil des entsprechenden maximalen Messbereichs befindet. Uninteressante Bereich werden im Stand der Technik demnach genauso gut bzw. schlecht gescannt wie interessante. Auch werden Teile des Messbereichs gescannt, aus denen keine Information erhalten werden kann. Ein Beispiel ist beispielsweise ein von vornherein abgedeckter Bereich des Messbereiches, aus dem somit keine Reflektion erhalten werden können.

US 2016/182788 A1 offenbart ein "time-of-flight" Kamerasystem, das eine Beleuchtungseinheit mit einer beweglichen Komponente zum Scannen umfasst.

US 5 283 622 A betrifft eine Distanzmessvorrichtung, die an einem Auto installiert ist und dazu dient die Distanz des Autos zu einem davor befindlichen Auto zu ermitteln.

### Darstellung der Erfindung: Aufgabe, Lösung, Vorteile

Der vorliegenden Erfindung liegt die Aufgabe zugrunde ein Verfahren und eine Vorrichtung zur Distanzmessung derart weiter zu entwickeln, dass eine sinnvolle Unterscheidung von Unterbereichen des Messbereichs ermöglicht wird. Dadurch kann eine Verbesserung der Signalqualität der gesamten Messung erreicht sowie das vorhandene Zeitbudget besser ausgenutzt werden.

Gelöst wird die oben genannte Aufgabe durch ein Verfahren zur optischen Distanzmessung gemäß Anspruch 1, das das Durchführen von Messungen umfasst. Eine Messung umfasst das Aussenden mindestens eines Messpulses und das Empfangen des reflektierten Messpulses, der zuvor an einem Objekt reflektiert wurde. Erfindungsgemäß werden die Messungen unter Berücksichtigung von vorheriger Information über Objekte und/oder Freiräume innerhalb eines maximalen Messbereichs durchgeführt um unterschiedlich relevante Unterbereiche des maximalen Messbereiches unterschiedlich zu vermessen.

Bei dem von dem Objekt reflektierten Messpuls handelt es sich um einen Messpuls, der zuvor ausgesendet wurde, sodass sich durch die Reflektion an dem Objekt seine Ausbreitungsrichtung verändert hat. Man kann den reflektierten Messpuls somit als Echo des ausgesendeten Messpulses verstehen. Insbesondere wird mittels des Verfahrens die Laufzeit der Messpulse zu den Objekten, an denen diese reflektiert wurden, ermittelt und aus dieser mithilfe der Lichtgeschwindigkeit die von dem jeweiligen Messpuls zurückgelegte Distanz zu dem Objekt bestimmt. Dabei müssen nicht sämtliche ausgesandte Messpulse an Objekten reflektiert werden, sondern es sein kann, dass Messpulse an keinem Objekt reflektiert werden und somit nicht in Form eines reflektierten Messpulses empfangen werden.

Eine optische Distanzmessung zeichnet sich dadurch aus, dass unter Ausnutzung von optischen Signalen, hier optischen Messpulsen, Distanzen bestimmt werden. Unter dem Begriff "Distanz" ist eine Entfernung zu verstehen. Unter der vom Messpuls zurückgelegten Distanz ist die Strecke zwischen dem Sendeelement, das den Messpuls ausgesandt hat, und dem Objekt, das diesen reflektiert hat, plus der Strecke zwischen dem Objekt und dem Empfangselement, das den entsprechenden reflektierten Messpuls empfangen hat, zu verstehen. Da es sich bei dem mindestens einen Objekt typischerweise um ein dreidimensionales Objekt handelt, sodass einige Bereiche des Objektes näher und andere Bereiche des Objektes weiter entfernt angeordnet sein können, ist mit dem Begriff "Distanz zu dem Objekt" die Entfernung zu zumindest einer Stelle des Objektes gemeint, und zwar der Stelle, auf die der Messpuls aufgetroffen und an der diese reflektiert wurde. Mit Laufzeit ist die Zeit zu verstehen, die der Messpuls für die zuvor beschriebene Distanz gebraucht hat. Das Verfahren dient vor allem zur Distanzmessung zur Anwendung in der fahrerlosen Navigation eines Fahrzeugs. Dafür werden die Distanzen zu sämtlichen Objekten, die in einem maximalen Messbereich oder einem Scanmessbereich liegen, bestimmt. Vor allem handelt es sich bei dem Verfahren um ein LIDAR Verfahren.

Bevorzugterweise umfasst eine Messung das Aussenden mehrerer Messpulse, vor allem einer Messpulsfolge. Bei einem Messpuls handelt es sich insbesondere um ein optisches, insbesondere elektromagnetisches, Signal. Der Messpuls hat vorzugsweise eine Wellenlänge, die nicht aus dem für das menschliche Auge sichtbaren Bereich stammt. Vorzugsweise wird aus Sicherheitsgründen unsichtbares Infrarot verwendet. Bevorzugterweise weist ein Messpuls eine Pulsdauer auf, sodass man den Messpuls als eine zeitlich begrenzte Portion elektromagnetischer Strahlung verstehen kann. Da es sich beim Messpuls um ein elektromagnetisches Signal handelt und somit die Geschwindigkeit des Messpulses bekannt ist, kann aus der Laufzeit eines Messpulses mithilfe der Lichtgeschwindigkeit darauf geschlossen werden, welche Strecke der Messpuls in der Laufzeit hinter sich gebracht hat.

Unter dem Begriff "maximaler Messbereich" ist vor allem ein dreidimensionaler Bereich gemeint, aus dem Reflektionen der ausgesandten Messpulse empfangen werden können. Vorzugsweise kann eine Vorrichtung, mit Hilfe derer das Verfahren zur optischen Distanzmessung ausgeführt wird, im maximalen Messbereich Messungen durchführen. Der maximale Messbereich wird durch ein maximales Sichtfeld und eine maximale Reichweite definiert. Die maximale Reichweite hingegen definiert einen maximalen Distanzbereich, der sich ausgehend von einer Vorrichtung zur Distanzmessung durchgehend bis zur maximalen Reichweite erstreckt. Das maximale Sichtfeld kann durch zwei Winkelsektoren in zwei Ebenen aufgespannt, die senkrecht zueinander stehen. In einer dieser Ebenen, d.h. zweidimensional, kann das maximale Sichtfeld als Winkelsektor verstanden werden, d.h. einem Kreissektor ohne Begrenzung durch einen Kreisbogen. In anderen Worten wird der Winkelsektor ausschließlich durch zwei Kreisradien ausgehend von der Vorrichtung begrenzt. Dreidimensional bildet das maximale Sichtfeld eine sich in Strahlenausbreitungsrichtung ins Unendliche erstreckende Pyramide. Durch die maximale Reichweite wird diese unendlich lange Pyramide in ihrer Höhe eingeschränkt, sodass der maximale Messbereich gebildet wird. Das maximale Sichtfeld und die maximale Reichweite sind technisch bedingt. Dabei weist die Pyramide vorzugsweise einen nach außen gewölbtem Boden auf.

Erfindungsgemäß ist vorgesehen, dass die Messungen unter Berücksichtigung von vorheriger Information über Objekte und/oder Freiräume innerhalb eines maximalen Messbereichs durchgeführt werden um unterschiedlich relevante Unterbereiche des maximalen Messbereiches unterschiedlich zu vermessen.

Unter vorheriger Information ist Information zu verstehen, die zu einem Zeitpunkt vor der Durchführung der Messungen zur Verfügung steht. In anderen Worten handelt es sich um Vorabinformation bzw. a priori Information. Vorzugsweise handelt ist sich bei der vorherigen Information um Wissen über Objekte und/oder Freiräume innerhalb des maximalen Messbereichs.

Insbesondere beeinflusst die vorherige Information die Durchführung der Messungen. Die vorherige Information betrifft Objekte und/oder Freiräume innerhalb des maximalen Messbereiches. Dabei ist insbesondere zu verstehen, dass auf Basis der vorherigen Information geschlossen werden kann, in zumindest welchen Bereichen, das heißt Unterbereichen des maximalen Messbereichs, sich Objekte und/oder Freiräume befinden. Es können somit gezielt Bereiche höherer Relevanz intensiver gescannt und somit auch detaillierter aufgelöst werden als Bereiche, die eine geringere Relevanz aufweisen. Unter dem Begriff "Scannen" ist das Aussenden von Messpulsen, vor allem Messpulsfolgen, in einen Bereich gemeint, sodass dieser Bereich vermessen wird. Dabei werden die Messpulse bzw. die Messpulsfolgen in leicht unterschiedliche Raumwinkel versandt, sodass der gesamte Bereich abgetastet werden kann.

Als weiterer Vorteil kann das zur Verfügung stehende Zeitbudget für einen Scan effektiver genutzt werden. Das vorhandene Zeitbudget (T(frame)) hinsichtlich Time-of-Flight basierten Messungen ergibt sich grundsätzlich durch zwei zentrale Einschränkungen:
Erstens sollte nach dem Aussenden eines Messpulses im Stand der Technik die doppelte Time-of-Flight bis zur maximalen Reichweite abgewartet werden (T(maximale Reichweite)), bis ein neuer Messpuls im gleichen Bereich des Sichtfeldes ausgesendet werden kann. Ansonsten könnten ankommende Reflektionen nicht klar den ausgesandten Messpulsen zugeordnet werden und es entstehen, ähnlich dem Aliasing-Effekt, sogenannte Ghost-Targets. Dieser Effekt limitiert somit die Häufigkeit des Aussendens des Messens. Da jedoch häufigeres Messen eines Messbereiches die Messqualität verbessert, wird dadurch die Qualität der Messung limitiert.

Zweitens werden für das Aussenden und das Empfangen der Messpulse sowie für die Signalverarbeitung Hardwareressourcen benötigt. Um den vollen maximalen Messbereich gleichzeitig zu scannen muss diese Hardware für den gesamten maximalen Messbereich vorhanden sein. Es kann der maximale Messbereich in Unterbereiche aufgeteilt werden, die sequentiell vermessen werden. Somit kann ein großer Teil der Hardwareressourcen nur für eine Messgruppe ausgelegt und für alle Messgruppen verwendet werden. Dadurch wird jedoch die gesamte Zeit durch die Anzahl der Untermessbereiche geteilt, da nur ein Anteil der gesamten Messzeit für einen entsprechenden Untermessbereich verwendet werden kann und zur Verfügung steht. Insgesamt kann somit bei einem klassischen Time-of-Flight basierten Messen für einen homogenen Scan des gesamten maximalen Messbereiches jeder Unterbereich nur bedingt oft gemessen werden und zwar T(frame) geteilt durch die Anzahl der Unterbereiche sowie geteilt durch T(maximale Reichweite).

Dadurch, dass im Rahmen der vorliegenden Erfindung weniger relevante Bereiche unterschiedlich vermessen werden können, kann das vorhandene Zeitbudget effektiver genutzt werden, da gezielt Zeit, die ansonsten für die Vermessung eines nicht relevanten oder weniger relevanten Bereichs eingesetzt worden wäre, für die Vermessung relevanter Bereiche eingesetzt werden. Nicht relevante Unterbereiche des maximalen Messbereiches werden weniger intensiv vermessen, da dadurch keine Mehrinformation gewonnen wird. Somit erhöht sich Signalqualität des Messergebisses. Relevanter Bereiche können in der gleichen verfügbaren Zeit viel detaillierter aufgelöst werden als im Stand der Technik.

Erfindungsgemäß umfasst das Verfahren eine Definition von Unterbereichen des maximalen Messbereiches, eine Klassifikation dieser nach Relevanz und ein unterschiedliches Vermessen unterschiedlich relevanter Unterbereiche. Insbesondere ist hierin die Berücksichtigung der vorherigen Information über Objekte und/oder Freiräume im maximalen Messbereich zur Durchführung der Messungen zu verstehen. Unter einem Objekt kann ein Gegenstand, wie bspw. eine Ampel oder ein Verkehrsschild, eine verkehrsrelevante Struktur, wie bspw. eine Straße, und andere Verkehrsteilnehmer, wie bspw. ein Fahrzeug oder eine Person, verstanden werden, die sich im maximalen Messbereich befindet, während ein Freiraum als Bereich zu verstehen ist, in dem sich kein Objekt befindet.

Vor allem werden Unterbereiche des maximalen Messbereiches in relevante und/oder weniger relevante und/oder nicht relevante Unterbereiche klassifiziert. Dabei werden Unterbereiche verschiedener Relevanz unterschiedlich vermessen.

Erfindungsgemäß werden relevante Unterbereiche im Vergleich zu weniger relevanten und/oder nicht relevanten Unterbereichen intensiver vermessen, sodass pro Raumeinheit mehr Messpulse in relevante als in weniger und/oder nicht relevante Unterbereiche versandt werden. Die "Dichte" der Messungen ist somit höher. Nicht relevante Unterbereiche könnten vorzugsweise gar nicht oder zumindest weniger intensiv vermessen werden. Der Begriff des "unterschiedlichen Vermessens" bezieht sich somit vor allem auf eine unterschiedliche Intensität, mit der unterschiedlich relevante Unterbereiche gescannt werden.

Die Definition von Unterbereichen und die Klassifikation nach Relevanz richten sich insbesondere nach Informationen, die hinsichtlich einer fahrerlosen Navigation relevant sind. Bspw. könnte zunächst festgestellt werden, in welchen Unterbereichen auf Basis der vorherigen Information eindeutig ist, dass sich dort Freiräume und/oder Objekte befinden. Die Objekte könnten in einem nächsten Schritt erkannt und nach Relevanz kategorisiert werden. Interessante Objekte könnten bspw. andere Verkehrsteilnehmer sein. Die entsprechenden Unterbereiche könnten als relevant eingestuft werden. Dabei könnte sich dies die Relevanz auch daran richten, ob sich die anderen Verkehrsteilnehmer bewegen und mit welcher Geschwindigkeit. Ferner könnten eindeutige Freiräume als nicht relevant klassifiziert werden.

Ferner könnten Unterbereiche, in denen noch nicht eindeutig feststeht, ob sich hier (nur) Freiraum oder Objekte befinden, als relevant eingestuft werden. Dies würde dazu dienen diese noch nicht eindeutig klassifizierten Bereiche noch genauer zu untersuchen, da als relevant eingestufte Unterbereiche stärker abgetastet werden. Nach einer ersten gröberen Klassifikation könnte somit mithilfe der stärkeren Abtastung von als relevant eingestuften, noch nicht eindeutig klassifizierten Bereichen, eine finale Klassifikation erfolgen. Zudem könnte ein weit entfernter Bereich in Fahrtrichtung als relevant eingestuft werden, da sich das Fahrzeug daraufhin bewegt und nach auftauchenden anderen Verkehrsteilnehmern oder anderen fahrrelevanten Objekten durch eine hohe Abtastrate gesucht werden soll.

Vor allem können die Definition von Unterbereichen und die Klassifikation nach Relevanz einmalig erfolgen und/oder, insbesondere in Abhängigkeit von vorheriger Information, dynamisch angepasst werden.

Bevorzugterweise wird das Verfahren mittels einer Vorrichtung zur Distanzmessung durchgeführt, wobei das Verfahren das Vorgeben der vorherigen Information über Objekte und/oder Freiräume im maximalen Messbereich auf Basis der Position der Vorrichtung in Relation zu Objekten und/oder Freiräumen im maximalen Messbereich umfasst. Die Vorrichtung ist vorzugsweise an einem Fahrzeug, insbesondere an dessen Frontbereich, bspw. direkt hinter der Frontscheibe, angebracht und dient vorzugsweise zur fahrerlosen Navigation des Fahrzeuges.

Mögliche Objekten, zu denen die relative Position relevant ist, können insbesondere statische Objekte sein. Unter dem Begriff "statische Objekte" sind vor allem Objekte zu verstehen, die eine starre relative Position zu der Vorrichtung zur Distanzmessung aufweisen. Beispielsweise kann darunter ein Objekt, vor allem ein Bauteil, verstanden werden, das einen Teil des maximalen Messbereichs der Vorrichtung verdeckt. Beispielsweise kann die Fixierung einer Schutzscheibe des Fahrzeuges einen Teil des maximalen Messbereichs überdecken. Auch eine andere Vorrichtung zur Distanzmessung kann als Objekt aufgefasst werden.

Alternativ kann ein Objekt dynamisch sein. Unter dynamischen Objekten versteht man Objekte, welche sich in Relation zur Vorrichtung bewegen. Darunter kann beispielsweise ein anderer Verkehrsteilnehmer, vor allem ein anderes Fahrzeug, welches sich relativ zum Fahrzeug an dem die Vorrichtung angebracht ist, bewegt. Auch ein Scheibenwischer kann vor diesem Hintergrund als dynamisches Objekt klassifiziert werden.

In anderen Worten berücksichtigt die Durchführung der Messungen insbesondere vorherige Information zur genauen Position der Vorrichtung in Relation zu der Position von Objekten und/oder Freiräumen im maximalen Messbereich. Aufgrund der relativen Position der Vorrichtung zu Objekten im maximalen Messbereich können von vornherein verdeckte Unterbereiche des maximalen Messbereiches vorzugsweise als nicht relevant klassifiziert werden. Vorzugsweise werden diese Unterbereiche zumindest weniger intensiv, vorzugsweise gar nicht, vermessen.

Ferner können Unterbereiche des maximalen Messbereichs, die von vorherein nicht von Interesse sind, als weniger relevant oder nicht relevant klassifiziert werden, bspw. wenn ein überdimensionierter Messbereich vorliegt. In anderen Worten umfasst eine andere Vorrichtung einen Teil des maximalen Messbereichs, sodass die vorliegende Vorrichtung diesen nicht mehr vermessen muss. In einem solchen Fall würde die relative Position der Vorrichtungen zueinander berücksichtigt werden. Der Unterbereich, der somit nicht vermessen werden müsste, da er von der anderen Vorrichtung abgedeckt ist, könnte als nicht relevant eingestuft werden.

Ein weiteres statisches Objekt kann beispielsweise eine Straße sein. Dies kann insbesondere im Falle einer Vorrichtung zur Distanzmessung, die zur Verkehrsüberwachung eingesetzt wird, umgesetzt werden.

Vorteilhafterweise umfasst das Verfahren die Durchführung von Scans, wobei ein Scan mehrere Messungen umfasst, und wobei die Messungen unter Berücksichtigung von vorheriger Information über Objekte und/oder Freiräume innerhalb des maximalen Messbereichs durchgeführt werden.

Insbesondere umfasst das Verfahren das Ermitteln der vorherigen Information über Objekte und/oder Freiräume im maximalen Messbereich aus vorherigen Messungen. Ferner bevorzugt umfasst das Verfahren insbesondere die Durchführung dieser vorherigen Messungen, wobei Objekte und/oder Freiräume im maximalen Messbereich erkannt werden. Vor allem umfasst das Verfahren die Durchführung eines vorherigen Scans, woraus aus den Messdaten des vorherigen Scans die vorherige Information ermittelt wird.

Dabei kann es sich bei den vorherigen Messungen um den Scan handeln, der gerade abgeschlossen ist oder die vorherigen Information könnte auch auf Basis von mehr als nur den vorherigen Scan ermittelt werden. In letzten Fall könnte die vorherige Information auf allen vorherigen Messungen bzw. Scans basieren, bspw. durch Akkumulation von Information.

Insbesondere kann somit der Informationsvorteil vorheriger Messungen verwendet werden, um besonders interessante Bereiche zu bestimmen und im Detail im Rahmen des nächsten Scans zu vermessen. Die vorherige Information kann aus den Messdaten vorheriger Messungen durch eine High-Level-Verarbeitung gewonnen werden. Diese ermöglicht es zu bestimmen, in welchen Unterbereichen sich Objekte und/oder Freiräume befinden. Sie benutzt im Gegensatz zur normalen Signalverarbeitung auf Sensorlevel Algorithmen, welche auch die vorherigen Messdaten verwenden, wodurch mit größeren Zeitkonstanten die Performance stark verbessert wird. Es können auch Sensorfusion und semantische Zusammenhänge verwendet werden.

Alternativ oder zusätzlich kann die vorherige Information aus vorherigen Messungen anderer Vorrichtungen zur Distanzmessung, bspw. Sensoren, stammen. Ferner können Karteninformationen, bspw. interaktive Karten, als vorherige Information genutzt werden.

Insbesondere werden ein Sichtfeld und/oder ein Distanzbereich mindestens eines Unterbereiches des maximalen Messbereichs unter Berücksichtigung von vorheriger Information über Objekte und/oder Freiräume im maximalen Messbereich einmalig festgelegt und/oder dynamisch angepasst. Vor allem sind das Sichtfeld und/oder der Distanzbereich des Unterbereichs gegenüber dem maximalen Messbereich eingeschränkt.

Unter dem Begriff "einmalig Festlegen" ist vor allem zu verstehen, dass etwas zumindest für die Durchführung mehrerer Messungen und/oder Scans, bevorzugterweise generell, d.h. für alle zukünftigen Messungen, starr definiert ist. Wird etwas dynamisch angepasst, wird es zunächst definiert und dann diese Definition dynamisch verändert.

Insbesondere weist der Distanzbereich ein Anfang und ein Ende auf. Der Anfang und das Ende sind vor allem als ein Abstand zu einer Vorrichtung zur Durchführung des Verfahrens zu verstehen, zwischen denen der Distanzbereich liegt. Vorzugsweise kann ein Anfang des Distanzbereiches in einem gewissen Abstand zur Vorrichtung gewählt sein. Ferner könnte das Ende in einem Abstand zu einer maximalen Reichweite des maximalen Messbereichs gesetzt werden. Es könnten somit nur Messungen durchgeführt werden, deren Reflektionen ausschließlich aus dem so eingeschränkten Distanzbereich stammen.

Die Einschränkung des Distanzbereichs macht dabei die Messungen wesentlich effektiver und ist vor allem möglich, da zuvor ein Bereich der außerhalb dieses Distanzbereichs liegt als nicht relevant eingestuft wurde, bspw. da dort mit Sicherheit Freiraum liegt. Solche vorherige Information kann signaltechnisch berücksichtigt werden, sodass Reflektionen und ausgesandte Messpulse unter Berücksichtigung dieser Informationen einander zugeordnet werden können, und somit gegebenenfalls Ghost-Objekte, die von Aliasing- Effekten stammen und in diesem Bereich hätten auftreten können, ausgeschlossen werden können.

Dabei kann es sich bei dem Unterbereich vor allem um einen Scanmessbereich handeln. Vorteilhafterweise vermessen die Messungen eines Scans einen Scanmessbereich, der durch ein Sichtfeld und einen Distanzbereich definiert ist. Insbesondere wird der Scanmessbereich als relevanter Unterbereich klassifiziert, während der Rest des maximalen Messbereichs als weniger relevant eingestuft werden kann.

Durch die Einschränkung des Sichtfeldes und/oder des Distanzbereiches kann der Scanmessbereich sehr viel kleiner ausgebildet werden als der maximalen Messbereich. Insbesondere kann somit zuvor bestehende Information über Objekte und/oder Freiräume im maximalen Messbereich dazu verwendet werden, den zu scannenden Bereich, das heißt den Scanmessbereich, in bis zu drei Dimensionen einzuschränken. Dadurch kann das vorhandene Zeitbudget besser ausgenutzt und eine bessere Signalqualität erreicht werden.

Ferner kann insbesondere der Anfang des Distanzbereiches des Scanmessbereiches gezielt in einer gewissen Distanz von einer Vorrichtung zur Durchführung des Verfahrens gesetzt werden, wenn aus der vorherigen Information geschlossen werden kann, dass zwischen der Vorrichtung und dem Anfang keine relevanten Informationen zu erwarten sind.

Beispielsweise kann bei einer Vorrichtung zur Distanzmessung, die zur Verkehrsüberwachung eingesetzt wird, und die in einer gewissen Höhe über einer Straße, bspw. an einer Kreuzung, angebracht ist, der relevante Scanmessbereich von zwei Seiten aus eingeschränkt werden: Es kann mit sehr hoher Wahrscheinlichkeit davon ausgegangen werden, dass niemals Objekte in einem Messbereich um die Anbringungsposition der Vorrichtung zu erwarten sind, dieser Bereich also als Freiraum definiert werden kann. Erst ab einem Bereich bis zu einer gewissen Höhe ausgehend von der Straße sind Objekte, an denen Messpulse reflektiert werden können zu erwarten. Gleichzeitig kann mit Sicherheit davon ausgegangen werden, dass keine Objekte unterhalb der Straße zu finden sind. Somit kann der Distanzbereich auf die Distanz in zumindest einem Winkelbereich des Sichtfeldes bis zur Straße begrenzt werden. Somit kann der Distanzbereich in zumindest einem Bereich des Sichtfeldes deutlich eingeschränkt werden um somit die Messungen effektiver durchzuführen.

Ferner kann aus vorherigen Messungen erkannt werden, wenn eine Vorrichtung direkt hinter der Frontscheibe eines Autos verbaut ist, in welchen Momenten der Scheibenwischer einen Teil des maximalen Messbereiches versperrt. Für den nachfolgenden Scan kann somit der von vornherein ausgeblendete Bereich durch den Scheibenwischer gezielt nicht vermessen werden, indem dieser als nicht relevanter Bereich klassifiziert wird. Ferner kann beispielsweise auf Basis einer vorherigen Messung eine starke, lokale Verschmutzung einer Frontscheibe detektiert werden, die das Detektieren von Objekten unmöglich macht. Bei nachfolgenden Scans kann der dadurch beeinträchtigte Unterbereich des maximalen Messbereiches als nicht relevant und/oder weniger relevant deklariert werden, um somit das gewonnene Zeitbudget für relevante Unterbereiche zu verwenden.

Ferner kann beispielsweise aus vorherigen Messungen erkannt werden, dass bis zu einem weit entfernten, noch unklar detektierten Objekt sich kein weiteres Objekt befindet. Der Bereich um das noch zu weiter zu spezifierenden Objektes könnte als relevanter Unterbereich klassifiziert werden. Die Information über Freiraum vor diesem Objekt ermöglicht für den nachfolgenden Scan den Anfang des Distanzbereichs bis kurz vor dem vermuteten Objekt zu setzen und somit den zu scannenden Bereich stark einzuschränken.

Ferner kann beispielsweise aus vorherigen Messungen erkannt werden, dass sich in einer bestimmten Distanz ein festes, sich nicht bewegendes Objekt befindet, welches alle Pulse reflektiert. Aus dieser vorherigen Information für die darauf folgenden Messungen kann der Distanzbereich auf die Distanz bis zu diesem Objekt beschränkt werden.

Liegt bei diesem Szenario zusätzlich auch noch Information über sicheren Freiraum bis zu einer gewissen Distanz vor, kann der Anfang des Messbereichs bis auf diese Distanz gesetzt werden. Somit kann der Messbereich von zwei Distanzbereichen eingeschränkt werden.

Ferner kann beispielsweise der Distanzbereich einer im Frontbereich eines Fahrzeuges angeordnete Vorrichtung zur Distanzmessung beschränkt werden. Es kann aus einem vorherigen Scan erkannt oder aus statischen Annahmen auf Grund der Anbauposition angenommen werden, in welcher genauen Distanz die Straße angeordnet ist, sodass der das Ende des Distanzbereiches deutlich kürzer gewählt werden kann. Ferner könnte der Distanzbereich unter Berücksichtigung der Toleranz bezüglich einer Beladung des Fahrzeuges, dessen Aufrichtung bei Beschleunigung oder Veränderung bei dem Fahren von Rampen gewählt werden.

Insbesondere umfasst eine Vorrichtung zur Durchführung des Verfahrens eine Sendematrix mit Sendeelementen. Das Verfahren kann umfassen, dass Sendeelemente zu verschiedenen Gruppen zusammengefasst werden, wobei den Gruppen unterschiedliche Untermessbereiche des maximalen Messbereichs zugeordnet werden. Insbesondere unterscheiden sich die Unterbereich durch deren Distanzbereich. Es könnten bei einer im Frontbereich eines Fahrzeuges angeordneten Vorrichtung Sendeelemente, die sich am nächsten zur Straßen befinden (bspw. der untersten Reihe oder den untersten Reihen der Sendematrix) ein Messbereich zugeordnet werden, dessen Distanzbereich wesentlich reduziert ist, da die Straße eine weitere Fortbewegung der Messpulse beschränkt. Mittleren Reihen könnte ein anderer Messbereich zugeordnet werden, dessen Distanzbereich größer ist, während den oberen Reihen wiederum ein anderer Messbereich, bspw. mit dem größten Distanzbereich, zugeordnet werden kann.

Insbesondere kann der Unterbereich als Fokusbereich verstanden werden. Zudem könnte ein Unterbereich ein Scanmessbereich und ein anderer Unterbereich ein Fokusbereich sein, deren Sichtfelder und/oder Distanzbereiche unter Berücksichtigung von vorheriger Information über Objekte und/oder Freiräume im maximalen Messbereich einmalig festgelegt und/oder dynamisch angepasst werden. Vor allem durch die doppelte Beschränkung von Sichtwinkel und Distanzbereich kann auch mit einem verhältnismäßig kleinen Zeitbudget eine sehr gezielte Analyse von zuvor definierten Fokusbereichen ermöglicht werden. Ein Scanmessbereich ist vor allem ein Unterbereich des maximalen Messbereichs zu verstehen, der vermessen wird, während der Rest des maximalen Messbereichs von vornherein nicht vermessen wird. Der Scanmessbereich könnte somit den Unterbereich des maximalen Messbereichs deklarieren, in dem überhaupt Messungen vorgenommen werden bzw. aus dem Reflektionen ausgewertet werden. Der Scanmessbereich kann insbesondere einmalig festgelegt werden. Zudem könnte der Scanmessbereich auch dynamisch angepasst werden.

Erfindungsgemäß umfasst das Verfahren die Definition mindestens eines Fokusbereichs. Ein Fokusbereich definiert insbesondere ein Bereich, aus dem mittels der Messungen mehr essentielle Informationen zur fahrerlosen Navigation stammen sollen. Ein Fokusbereich kann beispielsweise ein Objekt, das zuvor erkannt wurde oder einen Unterbereich umfassen, der noch genauer klassifiziert werden muss. Der Fokusbereich wird als zuvor als relevant eingestufter Unterbereich des maximalen Messbereichs verstanden. Beispielsweise kann der Fokusbereich als Bereich um die Horizontale definiert sein, da insbesondere dort Objekte zu erwarten sind, deren Detektion in der fahrerlosen Navigation essentiell sind. Ein Fokusbereich kann insbesondere als relevanter Bereich eingestuft werden. Der Fokusbereich wird ferner oder alternativ als ein Unterbereich eines Scanmessbereiches eingestuft, wobei wird der Rest des Scanmessbereiches insbesondere als weniger relevant eingestuft wird. Der Rest des maximalen Messbereiches, das heißt der maximale Messbereich, der nicht durch den Scanmessbereich abgedeckt ist, kann insbesondere als nicht relevant eingestuft werden. Das Verfahren kann insbesondere den Fokusbereich unterschiedlich vermessen als den Rest des Scanbereiches beziehungsweise den Rest des maximalen Messbereiches.

Das Verfahren umfasst die Durchführung von Basismessungen zur Gewährleistung einer Grundperformance und Fokusmessungen zur Detailanalyse mindestens eines Fokusbereiches. Dabei vermessen die Fokusmessungen den Fokusbereich, während die Basismessungen den gesamten Scanmessbereich oder den maximalen Messbereich vermessen. Dabei wird der Scanmessbereich insbesondere einmalig festgelegt, zumindest für eine Reihe von Scans, während der mindestens einen Fokusbereich dynamisch nach jedem abgeschlossenen Scans angepasst werden kann.

Eine feste, homogene Grundperformance über den gesamten maximalen Messbereich beziehungsweise den definierten Scanmessbereich ist besonders in sicherheitskritischen Anwendungen, beispielsweise ADAS-System essentiell. Diese Grundperformance kann mit dem menschlichen peripheren Sehen verglichen werden, welches ausreichend gut ist um alles Wichtige wahrzunehmen, aber wenig Detailinformationen liefert.
Durch die Definition eines Fokusbereichs und dessen dynamischer Anpassung ähnelt das vorliegende Verfahren sehr der menschlichen visuellen Wahrnehmung, die aus einem peripheren Sehen und einem fokussierten Sehen besteht. Während die Basismessungen das periphere Sehen abdecken, bezieht sich der Fokusbereich auf ein fokussiertes Sehen. Auf diese Weise kann eine notwendige oder zu garantierende Grundperformance gewährleistet werden, die zu jeder Zeit, ähnlich dem peripheren Sehen der menschlichen Wahrnehmung garantieren kann, welche Objekte und/oder Freiräume sich im Scanmessbereich oder maximalen Messbereich befinden. Hingegen können durch die Fokusmessung hinsichtlich des Fokusbereichs die dort befindlichen Objekte mit einem hohen Detailgrad aufgelöst werden. Dabei kann der periphere Scanmessbereich vor allem einmalig festgelegt werden und/oder dynamisch angepasst werden.

Die dynamische Anpassung des Sichtfeldes und/oder des Distanzbereichs von Unterbereichen des maximalen Messbereichs erfolgt insbesondere nach jedem abgeschlossenen Scan, wobei die vorherige Information auf Basis des gerade abgeschlossenen Scans zumindest aktualisiert oder ersetzt wird. Die vorherige Information bezieht sich somit vorzugsweise immer aus der Information, die aus dem direkt davor abgeschlossenen Scan resultiert oder aus der aktuellsten Information aus anderen Vorrichtungen zur Distanzmessung, bspw. Sensoren. Insbesondere wird die vorherige Information über Objekte und/oder Freiräume im maximalen Messbereich aus den zuvor durchgeführten Basismessungen über den gesamten Scanmessbereich oder den maximalen Messbereich ermittelt. Dabei handelt es sich bei den vorherigen Basismessungen insbesondere um die Basismessungen des vorherigen Scans. Während der Scanmessbereich vorzugsweise einmalig festgelegt wird, kann der Fokusbereich nach jedem Scan erneut angepasst werden. Auch der Scanmessbereich könnte, bspw. nach einer Reihe von Scans, dynamisch angepasst werden.

Ferner kann das Verfahren das Tracking von erkannten Objekten und/oder das Ermitteln einer vermutlich zukünftigen Position eines erkannten Objektes zur dynamischen Anpassung des Sichtfeldes und/oder des Distanzbereichs des Fokusbereiches umfassen. Unter dem Begriff "Tracking" ist zu verstehen, dass die Position des erkannten Objektes anhand mehrerer aufeinanderfolgender Scans beobachtet wird. Beispielsweise kann eine Geschwindigkeit des Objektes erkannt werden. Anhand dieser Informationen kann ermittelt werden, an welcher Position sich das getrackte Objekt vermutlich in einem zukünftigen Zeitpunkt befinden wird. Diese Information kann zur Anpassung des Fokusbereiches verwendet werden.

Erfindungsgemäß weist das Verfahren ein Zeitbudget, insbesondere pro Scan, auf.

Das Verfahren umfasst das einmalige Festlegen und/oder eine dynamische Anpassung einer Aufteilung des Zeitbudgets auf unterschiedlich relevante Unterbereiche des maximalen Messbereichs. Insbesondere kann ein Teil des Zeitbudgets für die Vermessung relevanter Unterbereiche verwendet werden, während ein anderer, beispielsweise kleinerer Anteil, für weniger relevante Unterbereiche eingesetzt werden kann. Nicht relevante Unterbereiche können beispielsweise keinen Anteil des Zeitbudgets erhalten. Erfindungsgemäß wird ein erster Anteil des Zeitbudgets für die Fokusmessungen verwendet, während ein zweiter Anteil des Zeitbudgets für Basismessungen verwendet wird. Ferner bevorzugt besteht in einem solchen Fall das gesamte Zeitbudget aus dem ersten Anteil für die Basismessungen und den zweiten Anteil für die Fokusmessungen.

Durch Erhöhung der Zeitauflösung kann eine genauere Detailmessung mindestens eines relevanten Unterbereiches, insbesondere eines Fokusbereichs, des maximalen Messbereichs erfolgen. Dieser kann ohne zusätzliche Auswertungshardware feiner gescannt werden, solange der Erhöhungsfaktor der Zeitauflösung kleiner ist als das Verhältnis zwischen dem Distanzbereich des Fokusbereichs und der maximalen Reichweite. Dies liegt daran, dass die eigentlich notwendige zusätzliche Auswertungshardware, insbesondere hinsichtlich der Speicherplatz, um die höhere zeitliche Auflösung zu ermöglichen, durch die Beschränkung des Scanmessbereichs oder Fokusbereichs im Vergleich zum maximalen Messbereich kompensiert wird.

In einem weiteren Aspekt betrifft die vorliegende Erfindung eine Vorrichtung zur optischen Distanzmessung, wobei die Vorrichtung dazu ausgebildet ist Messungen durchzuführen, wobei eine Messung das Aussenden mindestens eines Messpulses und bei Reflektion des ausgesandten Messpulses an einem Objekt das Empfangen des reflektierten Messpulses umfasst. Die Vorrichtung ist dazu ausgebildet die Messungen unter Berücksichtigung von vorherigem Wisser über Objekte und/oder Freiräume innerhalb eines maximalen Messbereiches durchzuführen um unterschiedlich relevante Unterbereiche des maximalen Messbereiches unterschiedlich zu vermessen. Die Vorrichtung ist erfindungsgemäß dazu ausgebildet ein oben beschriebenes Verfahren durchzuführen.

Bei der Vorrichtung handelt es sich vor allem um einen LIDAR-Sensor, der eine Sendematrix zum Aussenden von Messpulsen und eine Empfangsmatrix zum Empfangen reflektierter Messpulse umfasst.

Unter dem Begriff "Sendematrix" ist insbesondere ein Array von Sendeelementen zu verstehen, während eine Empfangsmatrix ein Array von Empfangselementen sein kann. Eine Matrix kann insbesondere als dreidimensional, insbesondere plattenförmiger, Körper verstanden werden, auf dessen einen Oberfläche die entsprechenden Elemente, Sendeelemente oder Empfangselemente, angeordnet sind. Vorzugsweise handelt es sich bei den Sendeelementen jeweils um einen Laser, sodass die Sendematrix als Laser-Array zu verstehen ist. Die Empfangselemente werden vor allem von Dioden, insbesondere Avalanche-Photodioden, am meisten bevorzugt Einzelphoton-Avalanche-Dioden, oder Pin-Dioden gebildet. Die Vorrichtung kann derart ausgebildet sein, dass Sendeelemente zu verschiedenen Gruppen zusammengefasst sind, wobei den Gruppen unterschiedliche Untermessbereiche des maximalen Messbereichs zugeordnet sind. Insbesondere unterscheiden sich die Unterbereich durch deren Distanzbereich. Es könnten bei einer im Frontbereich eines Fahrzeuges angeordneten Vorrichtung Sendeelemente, die sich am nächsten zur Straßen befinden (bspw. der untersten Reihe oder den untersten Reihen der Sendematrix) ein Messbereich zugeordnet sein, dessen Distanzbereich wesentlich reduziert ist, da die Straße eine weitere Fortbewegung der Messpulse beschränkt. Mittleren Reihen könnte ein anderer Messbereich zugeordnet sein, dessen Distanzbereich größer ist, während den oberen Reihen wiederum ein anderer Messbereich, bspw. mit dem größten Distanzbereich, zugeordnet sein kann.

Ferner bezieht sich die vorliegende Erfindung auf ein Computerprogrammprodukt, das ein computerlesbares Speichermedium umfasst, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen. Weiterhin betrifft die Erfindung ein computerlesbares Speichermedium, auf dem ein Programm gespeichert ist, das es einem Computer ermöglicht, nachdem es in den Speicher des Computers geladen worden ist, ein oben beschriebenes Verfahren, gegebenenfalls im Zusammenspiel mit einer oben beschriebenen Vorrichtung, durchzuführen.

### Kurze Beschreibung der Zeichnungen

Es zeigen schematisch:
- Figur 1: ein Verfahrensschema eines erfindungsgemäßen Verfahrens;
- Figur 2: eine perspektivische Ansicht verschiedener Messbereiche;
- Figur 3: eine zweidimensionale Ansicht eines maximalen Messbereichs (16) und eines Unterbereichs (16a); und
- Figur 4: eine Durchführung von Basismessungen und Fokusmessungen unter Aufteilung des zur Verfügung stehenden Zeitbudgets.

### Bevorzugte Ausführungsformen der Erfindung

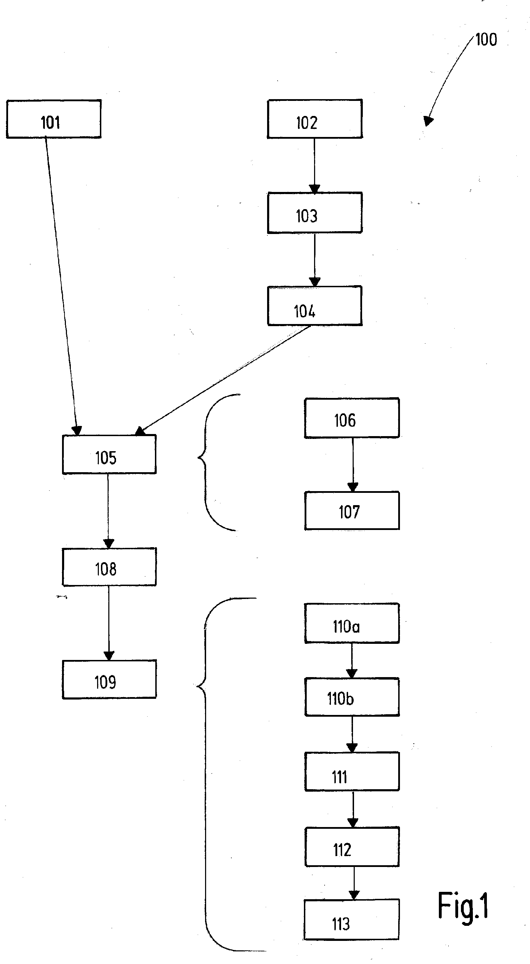

In Figur 1 ist ein erfindungsgemäßes Verfahren (100) dargestellt.

Gemäß des erfindungsgemäßen Verfahrens (100) werden Messungen durchgeführt (105). Eine Messung umfasst das Aussenden (106) mindestens eines Messpulses, insbesondere mehrerer Messpulse in bevorzugter Form von Messpulsfolgen, und das Empfangen (107) des mindestens einen reflektierten Messpulses nach Reflektion an einem Objekt. Vorzugsweise werden Scans durchgeführt (108). Ferner werden die Messungen unter Berücksichtigung von vorheriger Information über Objekte und/oder Freiräume innerhalb eines maximalen Messbereichs (16) durchgeführt (109).

Das Verfahren umfasst insbesondere das Vorgeben (101) der vorherigen Information und/oder das Ermitteln (102) dieser. Wird die vorherige Information ermittelt (102), geschieht dies vorzugsweise auf Basis der Durchführung (103) vorheriger Messungen mittels der Vorrichtung (10) zur Distanzmessung. Nach der Durchführung (103) vorheriger Messungen werden vorteilhafterweise Objekte und/oder Freiräume im maximalen Messbereich erkannt (104). Die Durchführung (109) von Messungen unter Berücksichtigung von vorheriger Information umfasst insbesondere die Definition (110a) von Unterbereichen und deren Klassifikation (110b) nach Relevanz. Insbesondere werden relevante und/oder weniger relevante und/oder nicht relevante Unterbereiche definiert (111).

Es folgt vorzugsweise das einmalige Festlegen und/oder die dynamische Anpassung (112) des Sichtfeldes (18a) und/oder des Distanzbereiches (19a) mindestens eines Unterbereichs (16a) unter Berücksichtigung von vorheriger Information. Dabei ist insbesondere der Scanmessbereichs (14) als Unterbereich (16a) des maximalen Messbereichs (16) und/oder ein Fokusbereich (15) zu verstehen.

Die Durchführung (109) von Messungen unter Berücksichtigung von vorheriger Information umfasst vorzugsweise ein unterschiedliches Vermessen (113) unterschiedlich relevanter Unterbereiche (16a). Insbesondere können Basismessungen und Fokusmessungen durchgeführt werden (114). Ferner kann ein zur Verfügung stehendes Zeitbudget einmalig festgelegt und/oder dynamisch angepasst werden (115) und zwar auf unterschiedlich relevante Unterbereiche (16a) des maximalen Messbereichs (16).

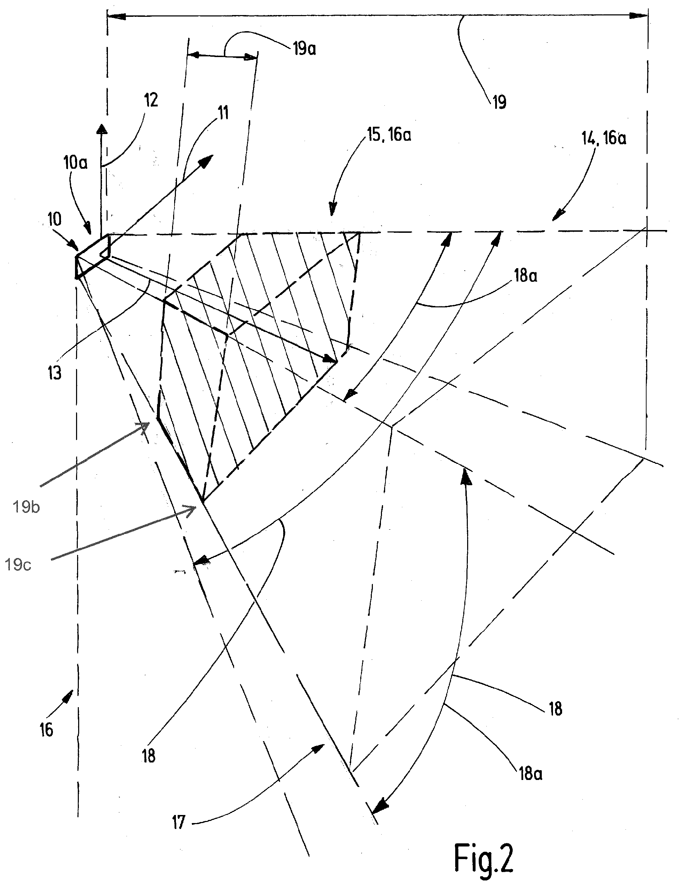

Figur 2 zeigt eine perspektivische Ansicht verschiedener Messbereiche.

Es ist eine erfindungsgemäße Vorrichtung (10) gezeigt sowie ein Koordinatensystem (10a), dessen Ursprung an der Vorrichtung (10) liegt. Das Koordinatensystem (10a) weist eine x-Achse (11), eine y-Achse (12) und eine z-Achse (13) auf.

In Figur 2 ist der maximale Messbereich (16) dargestellt. Der maximale Messbereich (16) erstreckt sich von der Vorrichtung (10) aus in Strahlenausbreitungsrichtung bis zu einer maximalen Reichweite (17). Die maximale Reichweite (17) definiert den maximalen Distanzbereich (19), der sich ausgehend von der Vorrichtung (10) bis zur maximalen Reichweite (17) erstreckt. Ferner wird der maximale Messbereich (16) durch das maximale Sichtfeld (18) definiert. Das maximale Sichtfeld (18) wird durch zwei Winkelsektoren in zwei Ebenen definiert, zum einen in der Ebene, die durch die y-Achse (12) und die z-Achse (13) aufgespannt wird, und zum anderen in der Ebene, die durch die x-Achse (11) und die z-Achse (13) aufgespannt wird. Insgesamt weist der maximale Messbereich (16) somit eine pyramidenförmige Gestalt auf.

In Figur 2 ist ferner ein Scanmessbereich (14) zu sehen, der einen Unterbereich (16a) des maximalen Messbereichs (16) darstellt. Der Scanmessbereich (14) erstreckt sich ebenfalls pyramidenförmig ausgehend von der Vorrichtung (10) aus bis zur maximalen Reichweite (17). Lediglich das Sichtfeld (18a) ist gegenüber dem maximalen Messbereich (16) eingeschränkt, indem ein kleinerer Winkelsektor in x-z-Ebene eingeschlossen wird. Der Distanzbereich des Scanmessbereiches (14) ist Im Vergleich zum maximalen Messbereich (16) nicht eingeschränkt.

Zudem ist in Figur 2 ein Fokusbereich (15) als Unterbereich (16a) des maximalen Messbereichs (16) zu sehen. Das Sichtfeld (18a) des Fokusbereichs (15) ist gegenüber dem Scanmessbereich (14) nicht eingeschränkt. Lediglich der Distanzbereich (19a) des Fokusbereichs (15) ist gegenüber dem maximalen Distanzbereich (19) des maximalen Messbereiches (16) sowie des Scanmessbereiches (14) eingeschränkt. So fängt der Distanzbereich (19a) des Fokusbereichs (15) in einem Abstand zur Vorrichtung an, am Anfang (19b) des Distanzbereichs (19a), und endet vor der maximalen Reichweite (17), am Ende (19c) des Distanzbereichs (19a). Der Fokusbereich (15) ist somit als scheibenförmiger Ausschnitt aus dem Scanmessbereich (14) zu verstehen.

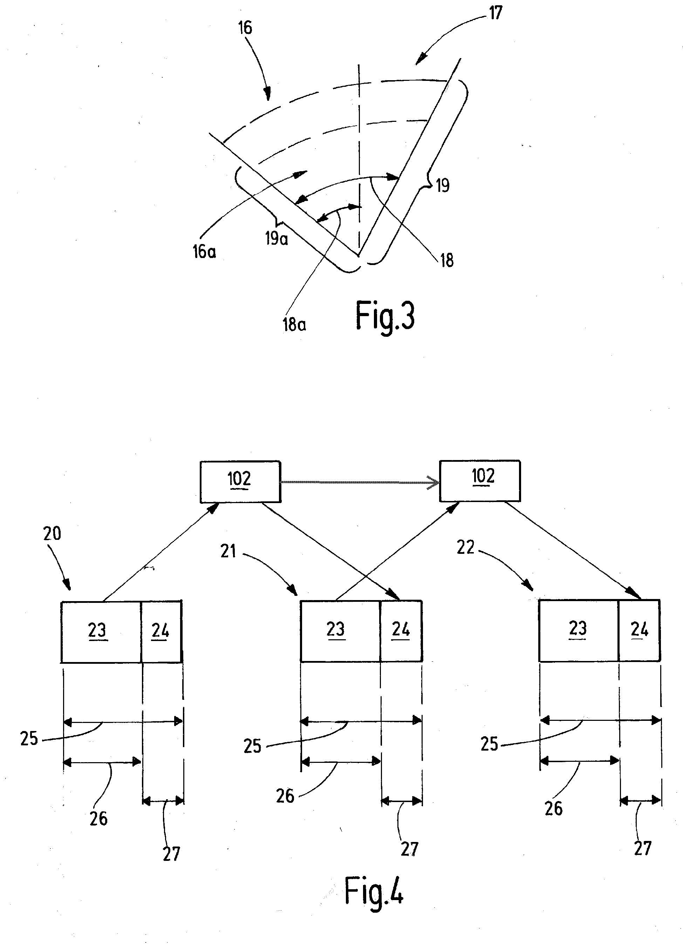

Figur 3 zeigt eine zweidimensionale Ansicht eines maximalen Messbereichs (16) und eines Unterbereichs (16a).

Dabei definiert sich der maximale Messbereich (16) durch ein maximales Sichtfeld (18) sowie einen maximalen Distanzbereich (19), der bis zur maximalen Reichweite (17) reicht. Figur 3 veranschaulicht, wie ein Unterbereich eingeschränkt sein kann, und zwar durch Einschränkung des Distanzbereichs (19a) und/oder des Sichtfeldes (18a). In dreidimensionaler Ansicht werden die entsprechenden Messbereiche ferner durch eine Aufspannung in der Ebene senkrecht zur Bildebene definiert, die in Figur 3 außen vor gelassen ist, wobei auch in dieser nicht gezeigten Ebene das Sichtfeld (18a) des Unterbereichs (16a) eingeschränkt sein kann.

Figur 4 beschreibt eine Durchführung von Basismessungen und Fokusmessungen unter Aufteilung des zur Verfügung stehenden Zeitbudgets.

In Figur 4 ist ein erster Scan (20) zu sehen, dessen Zeitbudget (25) einen ersten Anteil (26) und einen zweiten Anteil (27) aufweist. Der erste Anteil (25) wird für Basismessungen (22) verwendet, während der zweite Anteil (26) für Fokusmessungen (23) verwendet wird. Die Basismessungen dienen zur Vermessung des Scanmessbereiches (14). Die Fokusmessungen hingegen zur Vermessung der Fokusbereichs (15). Insbesondere werden die Messergebnisse aus den Basismessungen (22) eines Scans zur Ermittlung von vorheriger Information für den folgenden Scan mittels einer bevorzugten High-Level-Verarbeitung herangezogen. Basierend auf der so ermittelten vorheriger Information kann das Zeitbudget (24) und/oder der Scanmessbereich und/oder der Fokusbereich für den darauffolgenden Scan dynamisch angepasst werden. So folgt ein zweiter Scan (21), bei dem der Informationsvorteil aus dem ersten Scan (22) verwendet wurde. Analoges gilt für einen dritten Scan (23). Dabei demonstriert Figur 3 auch, wie vorherige Information von einem Scan zu einem anderen weitergegeben werden kann. Die vorherige Information kann somit akkumuliert werden.

### Bezugszeichenliste

- 100: Erfindungsgemäßes Verfahren
- 101: Vorgeben der vorherigen Information
- 102: Ermitteln der vorherigen Information
- 103: Durchführung vorheriger Messungen
- 104: Erkennen von Objekten und/oder Freiräumen im maximalen Messbereich
- 105: Durchführung von Messungen
- 106: Aussenden mindestens eines Messpulses
- 107: Empfangen des reflektierten Messpulses bei Reflektion an einem Objekt
- 108: Durchführen von Scans
- 109: Durchführung der Messungen unter Berücksichtigung von vorheriger Information über Objekte und/oder Freiräume innerhalb eines maximalen Messbereichs
- 110a: Definition von Unterbereichen
- 110b: Klassifikation von Unterbereichen nach Relevanz

- 111: Definition von relevanten und/oder weniger relevanten und/oder nicht relevanten Unterbereichen
- 112: Einmaliges Festgelegen und/oder dynamische Anpassung des Sichtfeldes und/oder des Distanzbereiches eines Unterbereiches
- 113: Unterschiedliches Vermessen unterschiedlich relevanter Unterbereiche
- 114: Durchführung von Basismessungen und Fokusmessungen
- 115: Einmaliges Festlegen und/oder dynamische Anpassung einer Aufteilung eines Zeitbudgets auf unterschiedlich relevante Unterbereichen des maximalen Messbereichs

- 10: Erfindungsgemäße Vorrichtung
- 10a: Koordinatensystem
- 11: x-Achse
- 12: y Achse
- 13: Z-Achse
- 14: Scanmessbereich
- 15: Fokusbereich
- 16: maximaler Messbereich
- 16a: Unterbereich
- 17: maximale Reichweite
- 18: maximales Sichtfeld
- 18a: Sichtfeld
- 19: maximaler Distanzbereich
- 19a: Distanzbereich
- 19b: Anfang des Distanzbereichs
- 19c: Ende des Distanzbereichs

- 20: erster Scan
- 21: zweiter Scan
- 22: dritter Scan
- 23: Basismessungen
- 24: Fokusmessungen
- 25: Zeitbudget
- 26: erster Anteil
- 27: zweiter Anteil

## Patentansprüche

1. Verfahren (100) zur optischen Distanzmessung,
wobei das Verfahren (100) das Durchführen (105) von Messungen umfasst, wobei eine Messung das Aussenden (106) mindestens eines Messpulses und bei Reflektion des ausgesandten Messpulses an einem Objekt das Empfangen (107) des reflektierten Messpulses umfasst,
wobei
die Messungen unter Berücksichtigung von vorheriger Information über Objekte und/oder Freiräume innerhalb eines maximalen Messbereichs (16) oder Scanmessbereichs durchgeführt werden (109) um unterschiedlich relevante Unterbereiche (16a) des maximalen Messbereiches (16) oder Scanmessbereichs unterschiedlich zu vermessen, **dadurch gekennzeichnet, dass**
das Verfahren (100) eine Definition (110a) von Unterbereichen des maximalen Messbereichs (16) oder Scanmessbereichs, eine Klassifikation (110b) der Unterbereiche nach Relevanz und ein unterschiedliches Vermessen (113) unterschiedlich relevanter Unterbereiche (16a) umfasst,
wobei relevante Unterbereiche im Vergleich zu weniger relevanten und/oder nicht relevanten Unterbereichen intensiver vermessen werden, sodass pro Raumeinheit mehr Messpulse in relevante als in weniger und/oder nicht relevante Unterbereiche versandt werden,
wobei das Verfahren die Definition mindestens eines Fokusbereichs (15) umfasst, wobei ein Fokusbereich (15) als relevanter Unterbereich des maximalen Messbereichs (16) oder als im Vergleich zum Rest des Scanmessbereichs relevanterer Unterbereich eines Scanmessbereichs klassifiziert wird,
wobei das Verfahren (100) die Durchführung (114) von Basismessungen zur Gewährleistung einer Grundperformance und von Fokusmessungen zur Detailanalyse des mindestens einen Fokusbereichs (15) umfasst, wobei mittels der Fokusmessungen der Fokusbereich und mittels den Basismessungen der Scanmessbereich oder der maximalen Messbereich (16) vermessen wird,
wobei das Verfahren (100) ein Zeitbudget umfasst,
wobei das Verfahren (100) ein einmaliges Festlegen und/oder dynamische Anpassung (115) einer Aufteilung des Zeitbudgets auf unterschiedlich relevante Unterbereiche des maximalen Messbereichs (16) oder Scanmessbereichs umfasst, wobei ein erster Anteil des Zeitbudgets für die Fokusmessungen und ein zweiter Anteil des Zeitbudgets für die Basismessungen verwendet werden.

2. Verfahren (100) nach Anspruch 1,
**dadurch gekennzeichnet, dass**
das Verfahren (100) mittels einer Vorrichtung (10) zur Distanzmessung durchgeführt wird,
wobei das Verfahren (100) das Vorgeben (101) der vorherigen Information über Objekte und/oder Freiräume im maximalen Messbereich (16) auf Basis der Position der Vorrichtung (10) in Relation zu Objekten und/oder Freiräumen im maximalen Messbereich (16) umfasst.

3. Verfahren (100) nach Anspruch 2,
**dadurch gekennzeichnet, dass**
es sich bei den Objekten um statische Objekte handelt.

4. Verfahren (100) nach einem der vorherigen Ansprüche,
**dadurch gekennzeichnet, dass**
das Verfahren die Durchführung (108) von Scans umfasst,
wobei ein Scan mehrere Messungen umfasst,
und wobei die Messungen unter Berücksichtigung von vorheriger Information über Objekte und/oder Freiräume innerhalb des maximalen Messbereichs (16) durchgeführt werden (109).

5. Verfahren (100) nach einem der vorherigen Ansprüche,
**dadurch gekennzeichnet, dass**
das Verfahren das Ermitteln (102) der vorherigen Information über Objekte und/oder Freiräume im maximalen Messbereich (16) aus vorherigen Messungen umfasst.

6. Verfahren (100) nach Anspruch 5,
**dadurch gekennzeichnet, dass**
das Verfahren die Durchführung (103) vorheriger Messungen umfasst,
wobei Objekte und/oder Freiräume im maximalen Messbereich (16) erkannt werden (104).

7. Verfahren (100) nach einem der vorherigen Ansprüche,
**dadurch gekennzeichnet, dass**
ein Sichtfeld (18a) und/oder ein Distanzbereich (19a) mindestens eines Unterbereiches (16a) des maximalen Messbereichs (16) unter Berücksichtigung von vorheriger Information über Objekte und/oder Freiräume im maximalen Messbereich (16) einmalig festgelegt und/oder dynamisch angepasst werden (112).

8. Verfahren (100) nach Anspruch 7,
**dadurch gekennzeichnet, dass**
der Distanzbereich (19a) ein Anfang und ein Ende aufweist,
wobei der Anfang des Distanzbereiches (19a) in einem Abstand zu einer Vorrichtung zur Durchführung des Verfahrens und/oder das Ende in einem Abstand zu einer maximalen Reichweite (17) des maximalen Messbereichs (16) gesetzt wird.

9. Verfahren (100) nach einem der vorherigen Ansprüche,
**dadurch gekennzeichnet, dass**
der Scanmessbereich (14) zumindest für eine Reihe von Messungen und/oder Scans einmalig festgelegt wird,
wobei der Fokusbereich (15) dynamisch angepasst wird.

10. Vorrichtung (10) zur optischen Distanzmessung,
wobei die Vorrichtung (10) dazu ausgebildet ist Messungen durchzuführen (105),
wobei eine Messung das Aussenden (10) mindestens eines Messpulses und bei Reflektion des ausgesandten Messpulses an einem Objekt das Empfangen (107) des reflektierten Messpulses umfasst,
wobei die Vorrichtung (10) dazu ausgebildet ist die Messungen unter Berücksichtigung von vorheriger Information über Objekte und/oder Freiräume innerhalb eines maximalen Messbereichs (16) durchzuführen (109) um unterschiedlich relevante Unterbereiche des maximalen Messbereiches (16) unterschiedlich zu vermessen, **dadurch gekennzeichnet, dass** die Vorrichtung (10) dazu ausgebildet ist ein Verfahren (100) nach einem der Ansprüche 1 bis 9 durchzuführen.

11. Computerprogrammprodukt, das ein computerlesbares Speichermedium umfasst, auf dem ein Programm gespeichert ist, das es einem Computer ermöglicht, nachdem es in den Speicher des Computers geladen worden ist, ein Verfahren (100) gemäß einem der Ansprüche 1 bis 9, gegebenenfalls im Zusammenspiel mit einer Vorrichtung (10) gemäß Anspruch 10, durchzuführen.

12. Computerlesbares Speichermedium, auf dem ein Programm gespeichert ist, das es einem Computer ermöglicht, nachdem es in den Speicher des Computers geladen worden ist, ein Verfahren gemäß einem der Ansprüche 1 bis 9, gegebenenfalls im Zusammenspiel mit einer Vorrichtung (10) gemäß Anspruch 10, durchzuführen.

## Claims

1. Method (100) for optical distance measurement,
wherein the method (100) comprises the performance (105) of measurements, wherein a measurement comprises the transmission (106) of at least one measuring pulse and, in case of a reflection of the transmitted measuring pulse on an object, the reception (107) of the reflected measuring pulse,
wherein
the measurements are performed (109) taking into consideration previous information about objects and/or free spaces within a maximum measuring range (16) or scan measuring range, in order to measure differently relevant sub-ranges (16a) of the maximum measuring range (16) or the scan measuring range,
**characterized in that**
the method (100) comprises a definition (110a) of sub-ranges of the maximum measuring range (16) or the scan measuring range, a classification (110b) of the sub-ranges according to relevance and a different measurement (113) of differently relevant sub-ranges (16a),
wherein relevant sub-ranges are measured more intensively compared to less relevant and/or non-relevant sub-ranges, so that more measuring pulses per spatial unit are sent to relevant sub-ranges than to less and/or non-relevant sub-ranges,
wherein the method comprises the definition of at least one focus area (15), wherein a focus area (15) is classified as a relevant sub-range of the maximum measuring range (16) or as a more relevant sub-range of a scan measuring range compared to the rest of the scan measuring range,
wherein the method (100) comprises the performance (114) of basic measurements to ensure a basic performance and of focus measurements to analyse the at least one focus area (15) in detail, wherein the focus area is measured by means of the focus measurements and the scan measuring range or the maximum measuring range (16) is measured by means of the basic measurements,
wherein the method (100) comprises a time budget,
wherein the method (100) comprises a one-time setting and/or dynamic adjustment (115) of a distribution of the time budget to differently relevant sub-ranges of the maximum measuring range (16) or scan measuring range,
wherein a first portion of the time budget is used for the focus measurements and a second portion of the time budget is used for the basic measurements

2. Method (100) according to claim 1,
**characterized in that**
the method (100) is performed by means of a device (10) for distance measurement,
wherein the method (100) comprises the specification (101) of the previous information about objects and/or free spaces in the maximum measuring range (16) based on the position of the device (10) in relation to objects and/or free spaces in the maximum measuring range (16).

3. Method (100) according to claim 2,
**characterized in that**
the objects are static objects.

4. Method (100) according to one of the preceding claims,
**characterized in that**
the method comprises the performance (108) of scans,
wherein a scan comprises several measurements,
and wherein the measurements are performed (109) taking into consideration previous information about objects and/or free spaces within the maximum measuring range (16).

5. Method (100) according to one of the preceding claims,
**characterized in that**
the method comprises the determination (102) of the previous information about objects and/or free spaces in the maximum measuring range (16) from previous measurements.

6. Method (100) according to claim 5,
**characterized in that**
the method comprises the performance (103) of previous measurements;
wherein objects and/or free spaces in the maximum measuring range (16) are detected (104).

7. Method (100) according to one of the preceding claims,
**characterized in that**
a field of view (18a) and/or a distance area (19a) of at least one sub-range (16a) of the maximum measuring range (16) is set once and/or is dynamically adapted (112), taking into consideration previous information about objects and/or free spaces in the maximum measuring range (16).

8. Method (100) according to claim 7,
**characterized in that**
the distance area (19a) has a beginning and an end,
wherein the beginning of the distance area (19a) is set at a distance from a device for performing the method and/or the end at a distance from a maximum range (17) of the maximum measuring range (16).

9. Method (100) according to one of the preceding claims,
**characterized in that**
the scan measuring range (14) is set once for at least a series of measurements and/or scans,
wherein the focus area (15) is dynamically adapted.

10. Device (10) for optical distance measurement,
wherein the device (10) is configured to perform measurements (105),
wherein a measurement comprises the transmission (106) of at least one measuring pulse and, in case of a reflection of the emitted measuring pulse on an object, the reception (107) of the reflected measuring pulse,
wherein the device (10) is configured to perform (109) the measurements taking into consideration previous information about objects and/or free spaces within a maximum measuring range (16), in order to measure differently relevant sub-ranges of the maximum measuring range (16) differently, **characterized in that** the device (10) is configured to perform a method (100) according to one of claims 1 to 9.

11. Computer program product which comprises a computer-readable storage medium on which a program is stored which, after it has been loaded into the memory of the computer, enables a computer to perform a method (100) according to one of claims 1 to 9, optionally in conjunction with a device (10) according to claim 10.

12. Computer-readable storage medium on which a program is stored which, after it has been loaded into the memory of the computer, enables a computer to perform a method according to one of claims 1 to 9, optionally in conjunction with a device (10) according to claim 10.

## Revendications

1. Procédé (100) pour la mesure optique de distance,
dans lequel le procédé (100) comprend l'exécution (105) de mesures,
dans lequel une mesure comprend l'émission (106) d'au moins une impulsion de mesure et, lors de la réflexion de l'impulsion de mesure émise au niveau d'un objet, la réception (107) de l'impulsion de mesure réfléchie,
dans lequel les mesures sont exécutées (109) en tenant compte d'une information précédente sur des objets et/ou espaces libres à l'intérieur d'une plage de mesure maximale (16) ou plage de mesure de balayage pour mesurer différemment des sous-plages différemment pertinentes (16a) de la plage de mesure maximale (16) ou plage de mesure de balayage,
**caractérisé en ce que**
le procédé (100) comprend une définition (110a) de sous-plages de la plage de mesure maximale (16) ou plage de mesure de balayage,
une classification (110b) des sous-plages selon la pertinence et une mesure différente (113) de sous-plages différemment pertinentes (16a),
dans lequel des sous-plages pertinentes sont mesurées de manière plus intensive en comparaison avec des sous-plages moins pertinentes et/ou non pertinentes de sorte que, par unité spatiale, plus d'impulsions de mesure sont envoyées dans des sous-plages pertinentes que dans des sous-plages moins et/ou non pertinentes,
dans lequel le procédé comprend la définition d'au moins une plage de focalisation (15), dans lequel une plage de focalisation (15) est classée en tant que sous-plage pertinente de la plage de mesure maximale (16) ou en tant que sous-plage pertinente, en comparaison avec le reste de la plage de mesure de balayage, d'une plage de mesure de balayage,
dans lequel le procédé (100) comprend l'exécution (114) de mesures de base pour garantir une performance de base et de mesures de foyer pour l'analyse détaillée de l'au moins une plage de focalisation (15), moyennant quoi, au moyen des mesures de foyer, on mesure la plage de focalisation et au moyen des mesures de base, la plage de mesure de balayage ou la plage de mesure maximale (16),
dans lequel le procédé (100) comprend un budget-temps,
dans lequel le procédé (100) comprend une détermination unique et/ou une adaptation dynamique (115) d'une répartition du budget-temps sur différentes sous-plages pertinentes de la plage de mesure maximale (16) ou plage de mesure de balayage, dans lequel une première part du budget-temps pour les mesures de foyer et une deuxième part du budget-temps pour les mesures de base sont utilisées.

2. Procédé (100) selon la revendication 1,
**caractérisé en ce que**
le procédé (100) est mis en œuvre au moyen d'un dispositif (10) pour la mesure de distance,
dans lequel le procédé (100) comprend la définition (101) de l'information précédente sur des objets et/ou espaces libres dans la plage de mesure maximale (16) sur la base de la position du dispositif (10) par rapport à des objets et/ou espaces libres dans la plage de mesure maximale (16).

3. Procédé (100) selon la revendication 2,
**caractérisé en ce que**,
concernant les objets, il s'agit d'objets statistiques.

4. Procédé (100) selon l'une des revendications précédentes,
**caractérisé en ce que**
le procédé comprend l'exécution (108) de balayages,
dans lequel un balayage comprend plusieurs mesures,
et dans lequel les mesures sont exécutées (109) en tenant compte d'une information précédente sur des objets et/ou espaces libres à l'intérieur de la plage de mesure maximale (16).

5. Procédé (100) selon l'une des revendications précédentes,
**caractérisé en ce que**
le procédé comprend la détermination (102) de l'information précédente sur des objets et/ou espaces libres dans la plage de mesure maximale (16) à partir de mesures précédentes.

6. Procédé (100) selon la revendication 5,
**caractérisé en ce que**
le procédé comprend l'exécution (103) de mesures précédentes,
dans lequel des objets et/ou espaces libres dans la plage de mesure maximale (16) sont reconnus (104).

7. Procédé (100) selon l'une des revendications précédentes,
**caractérisé en ce qu'**
un champ de vision (18a) et/ou une plage de distance (19a) d'au moins une sous-plage (16a) de la plage de mesure maximale (16) en tenant compte d'une information précédente sur des objets et/ou espaces libres dans la plage de mesure maximale (16) sont déterminés de manière unique et/ou adaptés dynamiquement (112).

8. Procédé (100) selon la revendication 7,
**caractérisé en ce que**
la plage de distance (19a) présente un début et une fin,
dans lequel le début de la plage de distance (19a) est établi à une distance d'un dispositif pour la mise en œuvre du procédé et/ou la fin est établie à une distance d'une étendue maximale (17) de la plage de mesure maximale (16).

9. Procédé (100) selon l'une des revendications précédentes,
**caractérisé en ce que**
la plage de mesure de balayage (14) est déterminée de manière unique au moins pour une série de mesures et/ou de balayages,
dans lequel la plage de focalisation (15) est adaptée dynamiquement.

10. Dispositif (10) pour la mesure optique de distance,
dans lequel le dispositif (10) est réalisé pour exécuter des mesures (105),
dans lequel une mesure comprend l'émission (10) d'au moins une impulsion de mesure et, lors de la réflexion de l'impulsion de mesure émise au niveau d'un objet, la réception (107) de l'impulsion de mesure réfléchie,
dans lequel le dispositif (10) est réalisé pour exécuter (109) les mesures en tenant compte d'une information précédente sur des objets et/ou espaces libres à l'intérieur d'une plage de mesure maximale (16) pour mesurer différemment des sous-plages différemment pertinentes de la plage de mesure maximale (16), **caractérisé en ce que** le dispositif (10) est réalisé pour mettre en œuvre un procédé (100) selon l'une des revendications 1 à 9.

11. Produit de programme informatique, lequel comprend un support de stockage lisible par ordinateur sur lequel est enregistré un programme, lequel permet à un ordinateur, après l'avoir chargé dans la mémoire de l'ordinateur, de mettre en œuvre un procédé (100) selon l'une des revendications 1 à 9, le cas échéant en interaction avec un dispositif (10) selon la revendication 10.

12. Support de stockage lisible par ordinateur sur lequel est enregistré un programme, lequel permet à un ordinateur, après l'avoir chargé dans la mémoire de l'ordinateur, de mettre en œuvre un procédé selon l'une des revendications 1 à 9, le cas échéant en interaction avec un dispositif (10) selon la revendication 10.
